## Europäisches Patentamt
## European Patent Office
## Office européen des brevets

(19)

(11) Numéro de publication: **0 128 066**
**B1**

(12) # FASCICULE DE BREVET EUROPÉEN

(45) Date de publication du fascicule du brevet:
**02.09.87**

(51) Int. Cl.⁴: **G 01 C 19/04**

(21) Numéro de dépôt: **84400922.5**

(22) Date de dépôt: **04.05.84**

(54) Appareil gyroscopique ou gyrométrique.

(30) Priorité: **06.05.83 FR 8307597**

(43) Date de publication de la demande:
**12.12.84 Bulletin 84/50**

(45) Mention de la délivrance du brevet:
**02.09.87 Bulletin 87/36**

(84) Etats contractants désignés:
**BE DE FR GB IT NL SE**

(56) Documents cité:
**EP-A-0 121 483**
**FR-A-1 328 401**
**FR-A-1 532 665**
**FR-A-2 354 537**
**US-A-4 061 043**

(73) Titulaire: **SOCIETE DE FABRICATION D'INSTRUMENTS DE MESURE (S.F.I.M.), 13, avenue Marcel Ramolfo- Garnier, F-91301 Massy (FR)**

(72) Inventeur: **Audren, Jean- Thierry, 14, Allée des Genêts, F-91940 Les Ulis (FR)**

(74) Mandataire: **Schrimpf, Robert, Cabinet Regimbeau 26, Avenue Kléber, F-75116 Paris (FR)**

EP 0 128 066 B1

LIBER, STOCKHOLM 1987

## Description

La présente invention concerne un appareil gyroscopique ou gyrométrique.

Dans ces appareils, un volant est mobile selon au moins deux degrés de liberté d'oscillation, autour d'une position centrale dans laquelle l'axe du volant est confondu avec l'axe d'un arbre rotatif, ce volant étant retenu radialement et entraîné en rotation par rapport au corps de l'appareil.

L'invention s'applique aux appareils de ce type qui comportent des moyens électrostatiques de commande de position ou de détection de position comprenant des électrodes, fixes par rapport au corps de l'appareil, ayant chacune une surface conductrice en regard avec une surface conductrice du volant avec laquelle elle coopère par interaction électrostatique.

Un tel appareil est en particulier décrit dans la demande européenne 84 400 646.0, déposée le 30.3.84, revendiquant la priorité française du 1.4.83, et publiée le 10.10.84 sous le n° EP-A-0 121 483.

Par "moyens électrostatiques de détection de position", on entendra par la suite des moyens pour assurer une mesure capacitive réalisée entre au moins un électrode et la surface conductrice du volant. Une telle mesure permet de déterminer l'orientation angulaire du volant ou bien sa position axiale, ou l'une et l'autre.

Par "moyens électrostatiques de commande de position", on entendra par la suite des moyens pour assurer une électrisation par influence du volant au moyen des électrodes de manière à exercer sur celui-ci une force axiale de sustentation ou un couple de précession (ou l'un et l'autre). L'application d'un couple de précession assurant le rappel du volant vers sa position centrale permet en particulier de faire fonctionner l'appareil en gyromètre.

L'invention est susceptible de s'appliquer à des appareils dont l'une au moins des fonctions de détection de position et de commande de position est assurée par des moyens électrostatiques, ce qui recouvre les cas suivants:
. détection électrostatique et commande électrostatique,
. détection électrostatique sans commande (cas du gyroscope),
. détection électrostatique mais commande non électrostatique (par exemple commande électromagnétique),
. détection non électrostatique mais commande électrostatique.

Dans les appareils de ce type, la vitesse élevée du volant (généralement de l'ordre de 400 t/s) favorise les perturbations dues à la viscosité du gaz résiduel, présent dans le boîtier de l'appareil bien que ce boîtier soit étanche et qu'on y ait pratiqué un vide assez poussé.

Ces perturbations, produites par les frottements des molécules du gaz immobile sur les parois du volant, exercent sur celui-ci de couples parasites ou "couples de ventilation"; ces couples, malgré leur faible valeur, introduisent cependant des erreurs de mesure non négligeables.

Par ailleurs, du fait des degrés de liberté d'oscillation du volant, et éventuellement d'un degré de liberté en translation, il existe en outre un risque de contact entre le volant tournant à grande vitesse et les électrodes fixes lors d'une accélération de grande intensité ou d'une rotation à grande vitesse. Un tel contact est susceptible d'endommager ou même de détruire le volant (la vitesse périphérique du vulant peut en effet atteindre plusieurs m/s ou dizaines de m/s).

L'invention a pour but de remédier à ces inconvénients.

Pour cela, elle propose de munir l'appareil d'un carter tournant rigide, enfermant le volant ledit carter présentant une paroi périphérique et des parois radicales isolantes disposées entre les surfaces conductrices du volant au regard des électrodes, de manière à présenter une surface diélectrique entre ces surfaces conductrices et celles des électrodes, ce carter étant solidaire de l'arbre d'entraînement du volant.

Le carter, tout en permettant l'électrisation par influence, assure ainsi un double rôle de butée mécanique pour les mouvements excessifs du volant (cette venue en butée s'effectuant sans risque puisque le carter tourne à la même vitesse que le volant) et d'entraînement dynamique des gaz résiduels présents à l'intérieur du carter, supprimant ainsi les effets néfastes de viscosité de ceux-ci.

Dans un mode de réalisation préférentiel, le carter est un carter ajouré sur sa paroi périphérique. De cette manière, les gaz résiduels présents dans le boîtier de l'appareil (qui est étanche et dans lequel on a pratiqué un vide poussé) sont entraînés en rotation par le carter, sans qu'il y ait besoin de rendre celui-ci étanche.

En variante, cependant, le carter peut être un carter étanche dans lequel le vide est maintenu.

Avantageusement, la paroi périphérique du carter (c'est-à-dire la paroi qui n'est pas située entre les surfaces conductrices du volant et les électrodes) comprend une surface métallique formant blindage magnétique en direction radiale.

De préférence, la permittivité relative des surfaces diélectriques du carter est au moins égale à 10.

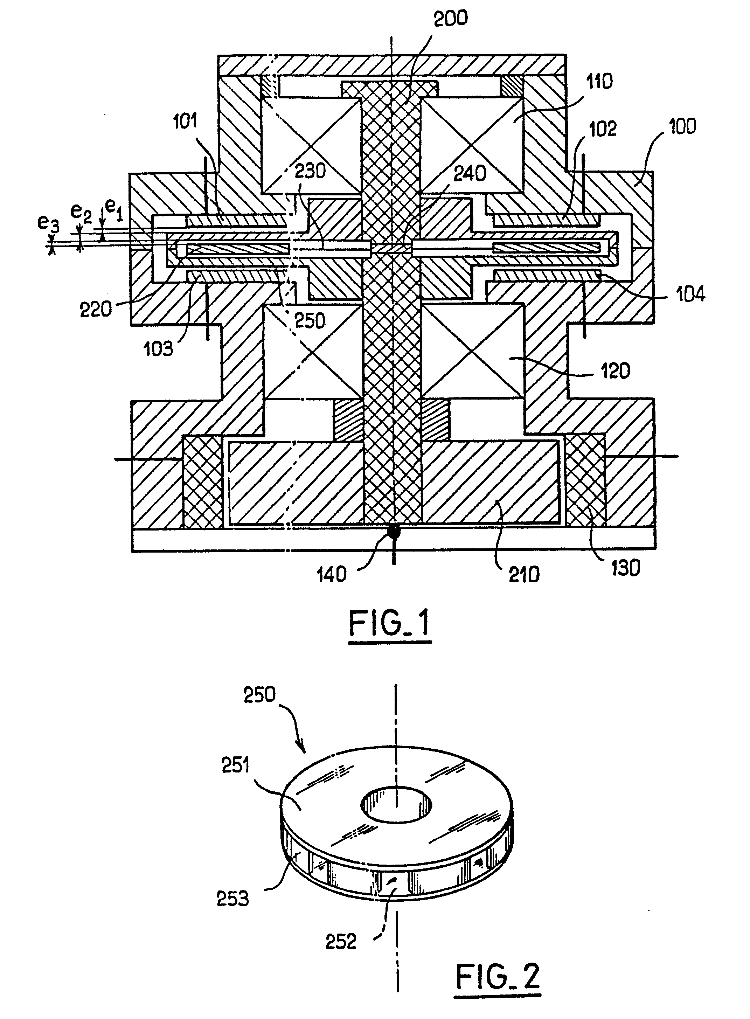

D'autres caractéristiques et avantages de l'invention apparaîtront à la lecture de la description détaillée ci-dessous, faite en référence aux dessins annexés, sur lesquels:
. la figure 1 est une vue en coupe schématique d'un appareil gyrométrique selon l'invention,
. la figure 2 est une vue perspective du carter selon l'invention.

Sur la figure 1, le boîtier 100 de l'appareil supporte un arbre rotatif 200 par l'intermédiaire d'une paire de roulements 110, 120. L'arbre 200 est entraîné en rotation, par exemple par un moteur synchrone dont le stator 130 est solidaire du boîtier 100, et le rotor 210 solidaire en rotation de l'arbre 200.

L'arbre 200 entraîne en rotation un équipage tournant formé d'un volant d'inertie 220, relié par un joint tournant 230 à un moyeu d'entraînement 240. L'équipage tournant comprend également le carter tournant 250 selon l'invention. Le boîtier comprend une série d'électrodes telles que 101 à 104 permettant, grâce à des effets électrostatiques, d'appliquer au volant 220 des couples de précession, éventuellement une force axiale de sustentation, ou encore de mesurer les écarts angulaires ou axial par rapport à la position centrale.

On notera que, pour permettre la détection de position par mesure capacitive, le volant d'inertie 220, le joint tournant 230, le moyeu 240 et l'arbre 200 doivent être conducteurs et électriquement reliés ensemble ainsi qu'à une borne fixe de l'appareil, par exemple par un contact tournant 140. En ce qui concerne les fonctions de sustentation et d'application des couples de précession, cette liaison est également souhaitable pour maintenir le volant à un potentiel constant, par exemple par mise à la masse.

Les surfaces du carter tournant 250 s'étendant radialement assurent donc, comme indiqué précédemment, le double rôle de butée mécanique et d'élimination des couples parasites dus à l'entraînement des gaz résiduels.

Cependant, ces surfaces sont diélectriques et sont situées entre le volant 220 et les électrodes 101 à 104. Elles ont donc tendance à augmenter l'intervalle volant-électrodes, ce qui pourrait être défavorable du point de vue de la sensibilité de l'appareil.

On choisit donc, pour ces surfaces diélectriques s'intercalant entre les surfaces conductrices homologues du volant de chaque électrode, un matériau dont la permittivité diélectrique relative est au moins égale à 10.

Ainsi, si on a sur l'exemple un intervalle volant-électrode formé d'une épaisseur $e_1$ de 12 μm de vide, d'une épaisseur $e_2$ du carter de 120 μm et d'une épaisseur $e_3$ de vide de 12 μm, l'intervalle volant-électrode sera de 144 μm.

Mais, si l'on suppose que la permittivité relative du matériau utilisé pour le carter tournant est de 10, l'épaisseur réelle $e_2$ de 120 μm sera équivalente à une épaisseur de vide de 12 μm. L'intervalle diélectrique équivalent volant-électrode sera donc de 36 μm, valeur parfaitement acceptable du point de vue électrique.

En outre, le champ électrique étant divisé par la permittivité relative, aucun risque de claquage dans le matériau diélectrique ne peut apparaître.

La figure 2 montre un exemple de carter tournant ainsi réalisé: celui-ci est formé de deux faces planes 251, 252 en matériau diélectrique, séparées par des entretoises 253.

Avantageusement, ces entretoises, qui forment la paroi périphérique du carter, sont en matériau métallique, pour former un blindage magnétique en direction radiale, protégeant ainsi le volant métallique contre les influences extérieures.

## Revendications

1. Un appareil gyroscopique ou gyrométrique, comprenant:
. un volant (220) mobile selon au moins deux degrés de liberté d'oscillation, autour d'une position centrale dans laquelle l'axe du volant (220) est confondu avec l'axe d'un arbre (200) rotatif, ce volant (220) étant retenu radialement et entraîné en rotation par rapport au corps (100) de l'appareil,
. des moyens électrostatiques de commande de position ou de détection de position comportant des électrodes (101-104), fixes par rapport au corps (100) de l'appareil, ayant chacune une surface conductrice en regard avec une surface conductrice du volant avec laquelle elle coopère par interaction électrostatique un carter tournant (250) rigide, enfermant le volant (220) ledit carter (250) présentant une paroi périphérique et des parois radicals isolantes, ces derrières étant disposées entre les surfaces conductrices du volant (220) en regard des électrodes (101-104), de manière à presenter une surface diélectrique entre ces surfaces conductrices et celles des électrodes, (101-104) ce carter (250) étant solidaire de l'arbre d'entraînement du volant (220).

2. Un appareil selon la revendication 1, caractérisé en ce que le carter (250) est un carter ajouré sur sa paroi périphérique (253).

3. Un appareil selon la revendication 1, caractérisé en ce que le carter (250) est un carter étanche dans lequel le vide est maintenu.

4. Un appareil selon l'une quelconque des revendications 1 à 3, caractérisé en ce que la paroi périphérique du carter (250) comprend une surface métallique formant blindage magnétique en direction radiale.

5. Un appareil selon l'une quelconque des revendications 1 à 4, caractérisé en ce que la permittivité diélectrique relative des surfaces diélectriques du carter (250) est au moins égale à 10.

## Patentansprüche

1. Gyroskopische oder gyrometrische Vorrichtung mit einem beweglichen Schwungrad (220) mit wenigstens zwei Grad Drehspiel um eine Zentralstellung, in welcher die Achse des Schwungrades (220) mit der Achse einer rotierenden Welle (200) zusammenfällt, wobei dieses Schwungrad (220) radial gehalten und relativ zum Körper (100) der Vorrichtung in Drehung versetzt wird, mit elektrostatischen Mitteln zur Positionssteuerung oder -erfassung mittels Elektroden (101-104), die bezüglich des Körpers (100) der Vorrichtung feststehen und von denen jede eine leitende Oberfläche im Hinblick auf eine leitende Oberfläche des Schwungrades aufweist, mit der sie in elektrostatischer Wechselwirkung zusammenarbeitet, dadurch gekennzeichnet, daß ein steifes drehendes Gehäuse (250) mit einer Umfangswand und isolierenden Radialwänden zwischen den leitenden Oberflächen des Schwungrades (220) und den Elektroden (101-104) das Schwungrad (220) derart einschließt, daß es eine nichtleitende Oberfläche zwischen den leitenden Oberflächen des Schwungrades und der Elektroden (101-104) bildet, wobei dieses Gehäuse (250) mit der Antriebswelle des Schwungrades (220) fest verbunden ist.

2. Vorrichtung nach Anspruch 1, dadurch gekennzeichnet, daß das Gehäuse (250) in seiner Umfangswand (253) durchbrochen ist.

3. Vorrichtung nach Anspruch 1, dadurch gekennzeichnet, daß das Gehäuse (250) dicht ist, so daß ein Vakuum darin aufrechterhalten wird.

4. Vorrichtung nach einem der Ansprüche 1 bis 3, dadurch gekennzeichnet, daß die Umfangswand des Gehäuses (250) eine metallische Oberfläche hat, die in Radialrichtung eine magnetische Abschirmung bildet.

5. Vorrichtung nach einem der Ansprüche 1 bis 4, dadurch gekennzeichnet, daß die relative Dielektrizitätskonstante der nichtleitenden Oberflächen der Hülle (250) mindestens gleich 10 ist.

**Claims**

1. A gyroscopic or gyrometric apparatus comprising:
- a wheel (220) capable of moving by at least two degrees of freedom of oscillation about a central position in which the axis of the wheel (220) is combined with the axis of a rotating shaft (200), this wheel (220) being held radially and being rotated relative to the body (100) of the apparatus,
- electrostatic position-control or position-detecting means comprising electrodes (101-104) which are stationary relative to the body (100) of the apparatus, each having a conductive surface facing a conductive surface of the wheel, with which it cooperates by electrostatic interaction,
- a rigid rotating housing (250) enclosing the wheel (220), said housing (250) having a peripheral wall and insulating radial walls, these walls being arranged between the conductive surfaces of the wheel (220) facing the electrodes (101-104) so as to exhibit a dielectric surface between these conductive surfaces and those of the electrodes (101-104), this housing (250) being integral with the driving shaft of the wheel (220).

2. An apparatus according to claim 1, characterised in that the housing (250) is a housing which is perforated on its peripheral wall (253).

3. An apparatus according to claim 1, characterised in that the housing (250) is a sealed housing in which a vacuum is maintained.

4. An apparatus according to any one of claims 1 to 3, characterised in that the peripheral wall of the housing (250) comprises a metal surface forming magnetic shielding in a radial direction.

5. An apparatus according to any one of claims 1 to 4, characterised in that the relative dielectric permittivity of the dielectric surfaces of the housing (250) is at least 10.

**0 128 066**

FIG_1

FIG_2

1